# EUROPÄISCHE PATENTSCHRIFT

(11) **EP 0 783 715 B1**
(45) Veröffentlichungstag und Bekanntmachung des Hinweises auf die Patenterteilung: **05.08.1998**
(21) Anmeldenummer: 95933319.6
(22) Anmeldetag: 26.09.1995
(51) Int. Cl.: G02B 6/42

(54) **OPTISCHE KOPPLUNGSANORDNUNG**
OPTICAL COUPLING ARRANGEMENT
DISPOSITIF DE COUPLAGE OPTIQUE

(30) Priorität: 29.09.1994 DE 4436204
(43) Veröffentlichungstag der Anmeldung: 16.07.1997
(73) Patentinhaber: SIEMENS AKTIENGESELLSCHAFT, 80333 München (DE)
(72) Erfinder: PLICKERT, Volker, D-14656 Brieselang (DE); KROPP, Jörg-R., D-12355 Berlin (DE)
(86) Internationale Anmeldenummer: DE9501374
(87) Internationale Veröffentlichungsnummer: WO9610200

(56) Entgegenhaltungen:
- EP-A- 0 395 854
- EP-A- 0 603 549
- EP-A- 0 607 881
- EP-A- 0 611 975
- US-A- 5 195 150

## Beschreibung

Die Erfindung betrifft eine optische Kopplungsanordnung mit einem ersten Träger mit einem elektrooptischen Bauelement, mit einem zweiten Träger, der zumindest ein Lichtwellenleiterende trägt und der eine zu seiner Unterseite hin offene Ausnehmung mit einer dem Lichtwellenleiterende zugewandten Spiegelfläche aufweist, und mit einem dritten Träger, der mindestens eine Linse enthält und zwischen dem ersten und dem zweiten Träger angeordnet ist, wobei der Strahlengang zwischen dem Lichtwellenleiterende und dem Bauelement über die Spiegelfläche und die Linse verläuft.

In der optischen Übertragungstechnik besteht die Aufgabe, Lichtwellenleiter und insbesondere Monomode-Lichtwellenleiter an elektrooptische Bauelemente (Sender/Empfänger) mit möglichst hohem Koppelwirkungsgrad anzukoppeln. Die Bauelemente können Halbleiterlaser, Empfangsdioden oder optoelektronische integrierte Schaltkreise sein. Die einzuhaltenden Toleranzen lassen sich erfahrungsgemäß durch sehr präzise durchgeführte und kontrollierte anisotrope Ätztechniken in Silizium, insbesondere hinsichtlich der Ätztiefen z. B. bei Wannen mit ebenen Bodenflächen, allein nicht einhalten. Bei den bisher bekannt gewordenen Anordnungen sind deshalb zusätzliche aufwendige Justagen erforderlich.

Eine aus der DE-C1-43 01 456 bekannte Anordnung zur Ankopplung eines Lichtwellenleiters an ein elektrooptisches Bauelement enthält einen ersten Träger, der in einer ersten Vertiefung eine kantenemittierende Laserdiode und in einer zweiten Vertiefung eine Abbildungsoptik aufnimmt. Eine beschichtete lichtbrechende Seitenwand lenkt eintretende Strahlung zur Unterseite des ersten Trägers hin ab. Ein zweiter Träger ist mit seiner Oberseite entlang der Unterseite des ersten Trägers in einer horizontalen Ebene beliebig verschiebbar und weist an seiner Unterseite Vertiefungen zur Aufnahme des Lichtwellenleiters und zur lichtbrechenden und spiegelnden Umlenkung der Strahlung auf. Die bekannte Koppelanordnung ist nur für Lichtwellenlängen geeignet, für die das Trägermaterial durchlässig ist, weil der Strahlengang überwiegend durch das Trägermaterial verläuft.

Aus der EP-A2-0 395 854 ist eine optische Kopplungsanordnung bekannt, die einen ersten Träger mit einer ersten, durch anisotropes Ätzen erzeugten, von seiner Oberseite ausgehende Vertiefung aufweist, in der ein elektrooptisches Bauelement angeordnet ist. Eine weitere V-förmige Vertiefung nimmt eine Kugellinse auf, deren Positionierung in bezug auf den Laser nur mit einer Genauigkeit von 1 bis 2 µm voreinstellbar ist. Dazu kommen noch geometrische Toleranzen von Laser und Kugellinse, wobei Höhenunterschiede (Chiphöhentoleranz) der strahlenden Kante des Lasers aufgrund der Abbildungseigenschaften der Linse zu Schielwinkeln führen. Ein zweiter Träger trägt einen Lichtwellenleiter und liegt mit seiner Unterseite auf der Oberseite des ersten Trägers auf und ist auf dieser verschiebbar. Der Strahlengang zwischen dem Lichtwellenleiterende und dem Bauelement verläuft über eine Spiegelfläche und die Linse.

Zur Anpassung der Fernfelder bzw. Lichtflecken von Bauelement (mit einem Laserlichtfleck von ca. 2 µm) und Lichtwellenleiterende (Lichtfleck ca. 10 µm) ist der Abstand (Gegenstandsweite) Bauelement/Linse zum Abstand (Bildweite) Linse/Lichtwellenleiterende in einem Verhältnis von ca. 1:5 gewählt. Die geometrischen Toleranzen bewirken vor der Linse einen Strahlversatz, der im Verhältnis von Gegenstandsweite zu Bildweite verstärkt wird, und zu einer erheblichen Verschlechterung des Koppelwirkungsgrads führt. Zumindest der zweite Träger muß während des Montageprozesses gewendet werden.

Aus der EP-A2-0 331 331 (Figur 10) ist eine optische Kopplungsanordnung der eingangs genannten Art mit einem ersten Träger mit einer Vertiefung bekannt, in der ein elektrooptisches Bauelement angeordnet ist. Ein zweiter Träger hat eine zu seiner Unterseite hin offene Ausnehmung mit einer einem Lichtwellenleiterende zugewandte Spiegelfläche. In einem sandwichartigen (wollten Sie nicht abnehmen??) Aufbau ist zwischen dem ersten und dem zweiten Träger ein dritter planer Träger angeordnet, der zumindest eine Linse enthält. Nähere Angaben hinsichtlich der Fixierung der drei Träger und der Justage der von den Trägern aufgenommenen Bauelemente sind der EP-A2-0 331 331 nicht entnehmbar.

Die Aufgabe der Erfindung besteht in der Schaffung einer optischen Kopplungsanordnung, bei der Montage- oder Bauteiltoleranzen, insbesondere Höhentoleranzen des optisch aktiven Bereichs des elektrooptischen Bauelements, in einem einzigen und möglichst einfachen Justagevorgang ausgleichbar sind.

Diese Aufgabe wird bei einer optischen Kopplungsanordnung der eingangs genannten Art erfindungsgemäß durch die kennzeichnenden Merkmale des Anspruchs 1 gelöst. Mit dem allgemeinen Begriff Strahlengang ist im Rahmen der vorliegenden Beschreibung bei einem sendenden elektrooptischen Bauelement der Lichtverlauf von dem Bauelement zum Lichtwellenleiterende und bei einem empfangenden Bauelement der umgekehrte Lichtweg gemeint.

Ein wesentlicher Vorteil der Erfindung ist darin zu sehen, daß der vorzugsweise vollständig außerhalb des Materials des ersten und zweiten Trägers verlaufende, hinsichtlich der Wellenlänge von dem Transmissionsverhalten dieses Materials unabhängige Strahlengang zwischen dem Lichtwellenleiterende und der Linse ohne aktive Justage, allein durch das Zusammenwirken der Bezugsflächen innerhalb zulässiger Toleranzen gehalten werden kann. Als Bezugsfläche des dritten Trägers dient vorteilhafterweise unmittelbar die Seitenfläche des Fortsatzes, der formschlüssig in die unterseitige Öffnung der Ausnehmung des zweiten Trägers paßt. Abweichungen des entweder direkt oder über eine weitere Spiegelfläche zwischen der Linse und dem Bauelement verlaufenden Strahlengangs können durch bezüglich des Strahlengangs laterale Relativverschiebungen zwischen der Unterseite des dritten Trägers und der Oberseite des ersten Trägers ausgeglichen werden. Wegen des Strahlengangverhältnisses sind dazu vorteilhafterweise nur vergleichsweise geringe Bewegungen erforderlich.

Der dritte Träger bildet durch die Verbindung seiner Oberseite mit der Unterseite des zweiten Trägers eine einstückige, gut zu handhabende kompakte Komponente der erfindungsgemäßen Kopplungsanordnung. Das Bauelement in der Vertiefung des ersten Trägers kann vorzugsweise bereits mit den Anschlüssen eines Gehäuses oder einer Aufnahme z. B. durch Bonden kontaktiert sein, so daß die zur aktiven Justage notwendige Ansteuerung des Bauelementes bereits über diese Anschlüsse erfolgen kann. Ein weiterer Vorteil der Erfindung tritt bei Verwendung eines kantenabstrahlenden sendenden Bauelementes, dessen Strahlung über eine an dem ersten Träger ausgebildete zweite Spiegelfläche auf die Linse gelangt, hervor, weil infolge der Höhentoleranz des Bauelementes unterschiedlich hoch abgestrahlte Lichtsignale über die zweite Spiegelfläche nur zu einem translatorischen Versatz, aber nicht zu einem Winkelfehler führen. Der translatorische Versatz ist durch laterale Justage des dritten Trägers auf der Oberseite des ersten Trägers vollständig ausgleichbar.

Eine im Hinblick auf eine Mehrfachanordnung (Kopplungsarray) vorteilhafte Ausgestaltung der erfindungsgemäßen Anordnung sieht vor, daß mehrere elektrooptische Bauelemente in Form eines kantenstrahlenden Laserdiodenbarrens und entsprechend mehrere zugeordnete Linsen und Lichtwellenleiterenden vorgesehen sind und daß die Vertiefung des ersten Trägers mit einer zweiten Spiegelfläche versehen ist, die den jeweiligen Strahlengang zwischen den Bauelementen und den Linsen umlenkt.

Um eine besonders präzise Justage zu ermöglichen, besteht der dritte Träger vorzugsweise aus Silizium und hat eine polierte Unterseite. Die Unterseite ist vorzugsweise planparallel zu der durch den oder die Lichtwellenleiterenden definierten Ebene im zweiten Träger ausgerichtet.

Eine weitere vorteilhafte Ausgestaltung der Erfindung sieht vor, daß die Ausnehmung des zweiten Trägers durchgehend ist und daß deren oberseitige Öffnung zur Ausrichtung einer Vertiefung für das Lichtwellenleiterende dient.

Der dritte Träger kann in Doppelfunktion auch zur hermetisch dichten Kapselung des Bauelements dienen, indem nach einer vorteilhaften Fortbildung der Erfindung der dritte Träger die Vertiefung des ersten Trägers vollständig abdeckt.

Bevorzugt können die Linsen auf dem dritten Träger ausgebildete Fresnellinsen sein. Die Linsen können aber vorteilhafterweise auch integrale Bestandteile des dritten Trägers, vorzugsweise des Fortsatzes sein. Die Materialdicke des Fortsatzes kann damit in Doppelfunktion auch zur Ausbildung starker Linsen dienen.

Ein Ausführungsbeispiel der Erfindung wird nachfolgend anhand einer Zeichnung näher erläutert; es zeigen:
Figur 1 einen Querschnitt einer erfindungsgemäßen Koppelanordnung,
Figur 2 einen Schnitt entlang der Linie II-II in Figur 1 und
Figur 3 eine Aufsicht bei teilweise entferntem zweiten Träger.

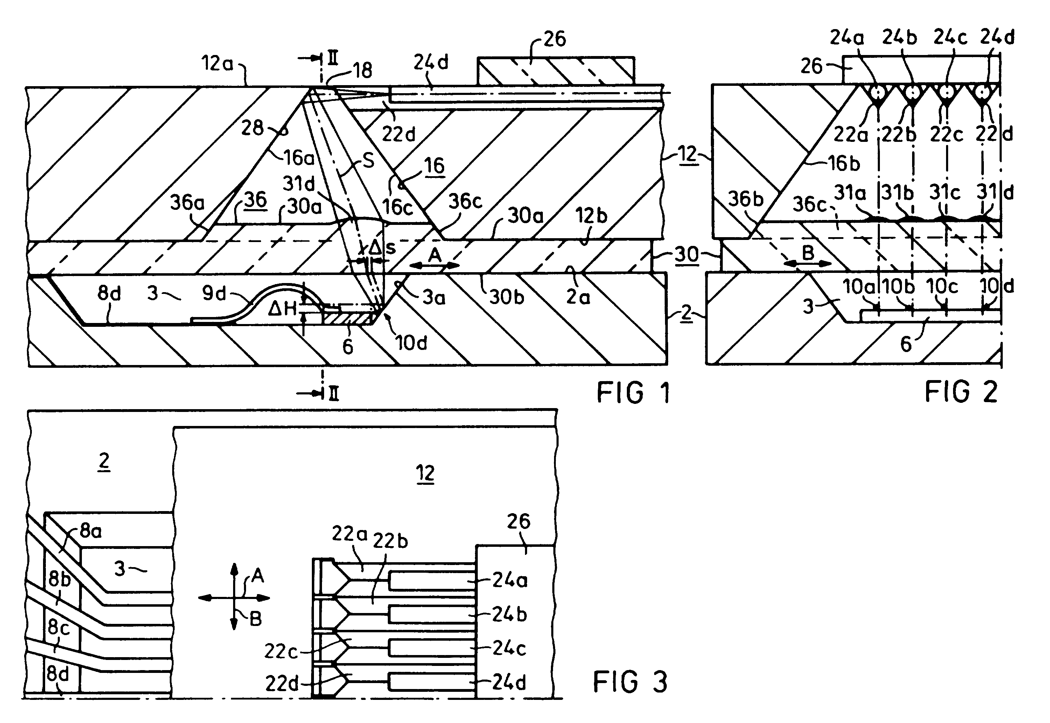

Der in den Figuren 1 bis 3 gezeigte erste Träger 2 aus monolithischen Silizium der Orientierung 100 nimmt in einer durch anisotropes Ätzen eingebrachten von seiner Oberseite 2a ausgehenden Wanne 3 ein Senderarray 6 auf. Das Senderarray 6 ist als kantenstrahlender Laserdiodenbarren ausgebildet und umfaßt mehrere, über individuelle Zuleitungen 8a, 8b, 8c, 8d und Bonddrähte (gezeigt ist nur ein Bonddraht 9d, der mit der Zuleitung 8d verbunden ist) individuell ansteuerbare elektrooptische Bauelemente (Laserdioden) 10a, 10b, 10c, 10d. Das Sendearray 6 ist mit seinen Bauelementen einer verspiegelten Wannenfläche 3a zugewandt.

Ein zweiter Träger 12 ist aus zweiseitig strukturiertem Silizium gebildet. In den zweiten Träger aus monolithischem Silizium mit der Orientierung 100 ist eine zu seiner Unterseite 12b hin sich erweiternde, im Querschnitt annähernd V-förmige Ausnehmung 16 geätzt, die unter Bildung einer oberseitigen Öffnung 18 auch die Oberseite 12a des zweiten Trägers 12 durchdringt. Ein folgender Maskenprozeß bildet an der Oberseite 12a V-Nuten 22a, 22b, 22c, 22d mit einer derartigen Tiefe, daß in diese eingelegte Lichtwellenleiterenden 24a, 24b, 24c, 24d um einige um über die Ebene der Oberfläche 20 hinausstehen und von einem quer verlaufenden aufgeklebten Glasplättchen 26 gleichzeitig in die V-Nuten gedrückt und fixiert werden. Die Maske zur Strukturierung der V-Nuten kann sehr genau positioniert werden, weil deren Ausrichtung relativ zu der Öffnung 18 erfolgt. Von den Flanken 16a, 16b 16c der Ausnehmung 16 ist zumindest die den Lichtwellenleiterenden 24a, 24b, 24c, 24d gegenüberliegende Flanke 16a durch Metallbedampfung als Spiegelfläche 28 ausgebildet.

Ein zwischen dem ersten und dem zweiten Träger angeordneter dritter Träger 30 weist eine der Anzahl der elektrooptischen Bauelemente bzw. der Lichtwellenleiterenden entsprechende Anzahl in einer Reihe angeordneter Linsen 31a, 31b, 31c, 31d (sog. Linsenarray) auf. Alternativ zu dem dargestellten Beispiel können die Linsen 31a, 31b, 31c, 31d nicht als integrale Bestandteile des dritten Trägers im Bereich des Fortsatzes 36 aus dessen Material gebildet sein, sondern an entsprechenden Stellen auf der Oberfläche 30a des dritten Trägers 30 als Fresnellinsen ausgebildet sein. Das Material des dritten Trägers 30 ist gemäß der zu übertragenden Lichtwellenlänge optimiert. Der dritte Träger besteht beispielsweise aus Silizium, in dem derartige Linsen gebildet sind, daß das Fernfeld der elektrooptischen Bauelemente 10a, 10b, 10c, 10d (1 bis 2 µm Fleckdurchmesser) durch entsprechende Vergrößerung auf das Fernfeld der Lichtwellenleiterenden (beispielsweise 10 µm Fleckdurchmesser) angepaßt ist. Mittels zweier aufeinanderfolgender Maskenprozesse auf der Oberfläche 30a werden seitlich der refraktiven oder diffraktiven Linsen 31a, 31b, 31c, 31d anisotrop geätzte Flanken (in den Figuren sind nur die Flanken 36a, 36b, 36c erkennbar) hergestellt. Diese Flanken bilden die Seitenflächen eines die Linsen enthaltenden pyramidenstumpfförmigen Fortsatzes 36.

Die Ausnehmung 16 ist im Bereich der Unterseite 12b derart bemessen, daß der Fortsatz 36 genau in die Ausnehmung 16 paßt. Die Flanken 36a, 36b, 36c und eine weitere, der Flanke 36b gegenüberliegende, figürlich nicht dargestellte Seite des Pyramidenstumpfes des Fortsatzes 36 dienen dabei als Bezugsflächen, die mit den korrespondierenden Bezugsflächen 16a, 16b, 16c (und einer nicht dargestellten, der Fläche 16b gegenüberliegenden weiteren Fläche) zusammenwirken. Der dritte Träger 30 ist dadurch in bezug auf den zweiten Träger 12 in lateraler Richtung vollständig positioniert und fixiert. Die Linsen 31a, 31b, 31c, 31d sind damit in bezug auf die Spiegelfläche 16a bzw. die Lichtwellenleiterenden 24a, 24b, 24c, 24d positioniert. Die Unterseite 12b des Trägers 12 und die Oberseite 30a des Trägers 30 sind vor einer aktiven Justage z. B. durch Kleben miteinander verbunden.

Die Unterseite 30b des dritten Trägers 30 ist poliert und auf der Oberseite 2a des ersten Trägers 2 in lateraler Richtung (Doppelpfeile A, B) verschiebbar und deckt die Vertiefung 3 vollständig ab.

Zur lateralen Justage der erfindungsgemäßen Anordnung werden die Bauelemente 10a, 10b, 10c, 10d über die bereits hergestellte Kontaktierung (Leiter 8a, 8b, 8c, 8d und Bonddrähte) angesteuert. Durch Messung des eingekoppelten Lichtes in die Lichtwellenleiterenden wird eine laterale Verschiebung des dritten Trägers 30 - als einstückiges Bauelement mit dem zweiten Träger 12 - relativ zu dem ersten Träger 2 in Richtung der Doppelpfeile A,B durchgeführt, bis ein optimaler Koppelwirkungsgrad erreicht ist. Eine in Figur 1 übertrieben dargestellte Höhendifferenz ΔH der Bauelemente 10d führt über die Spiegelfläche 3a lediglich zu einem translatorischen Versatz Δs, aber nicht zu einem Schielwinkel. Der Versatz Δs ist durch die laterale Justage des dritten Trägers 30 mit vergleichsweise geringen Bewegungen in Richtung A ausgleichbar.

Im dargestellten Ausführungsbeispiel verläuft der Strahlengang S zwischen einem Lichtwellenleiterende (z. B. 24d) und dem zugeordneten elektrooptischen Bauelement (z. B. 10d) über die Spiegelfläche 28, die Linse 31d, die Spiegelfläche 3a zu dem Bauelement 10d.

Die erfindungsgemäße Anordnung kann in herkömmlicher Weise mit ihrem ersten Träger 2 auf einer metallischen Grundplatte montiert werden, wobei die Lichtwellenleiterenden horizontal aus der Anordnung herausführen. Die Dicke der Träger 2, 12,30 wird entsprechend der optimalen Fernfeldanpassung zwischen den Bauelementen und den Lichtwellenleiterenden und dem notwendigen Abbildungsmaßstab optimiert. Die hinsichtlich des Koppelwirkungsgrades wesentlich weniger kritische Z-Toleranz (in Richtung des Strahlengangs S bzw. der Lichtwellenleiterenden), die sich durch die Umlenkung der Höhentoleranz der Bauelemente ergibt, ist bedarfsweise durch Verschiebung der Lichtwellenleiterenden in den V-Nuten 22a, 22b, 22c, 22d ausgleichbar.

## Patentansprüche

1. Optische Kopplungsanordnung
- mit einem ersten Träger (2) mit einem (2a) elektrooptischen Bauelement (10d),
- mit einem zweiten. Träger (12), der zumindest ein Lichtwellenleiterende (24d) trägt und der eine zu seiner Unterseite (12b) hin offene Ausnehmung (16) mit einer dem Lichtwellenleiterende (24d) zugewandten Spiegelfläche (28) aufweist, und
- mit einem dritten Träger (30), der mindestens eine Linse (31d) enthält und zwischen dem ersten (2) und dem zweiten Träger (12) angeordnet ist,
- wobei der Strahlengang (S) zwischen dem Lichtwellenleiterende (24d) und dem Bauelement (10d) über die Spiegelfläche (28) und die Linse (31d) verläuft,
**dadurch gekennzeichnet, daß**
- der dritte Träger (30) einen Fortsatz (36) aufweist, der formschlüssig in die unterseitige Öffnung der Ausnehmung (16) des zweiten Trägers (12) paßt und dessen Seitenfläche mindestens eine Bezugsfläche (36a) bildet, die mit einer korrespondierenden Bezugsfläche (16a) des zweiten Trägers (12) zur lateralen Positionierung des dritten Trägers (30) und der Linse (31d) gegenüber dem zweiten Träger (12) zusammenwirkt, und
- daß die Oberseite (30a) des dritten Trägers (30) fest mit der Unterseite (12b) des zweiten Trägers (12) verbunden ist,
- während zur lateralen Justage der Linse (31d) in bezug auf das Bauelement (10d) die Unterseite (30b) des dritten Trägers auf der Oberseite (2a) des ersten Trägers (2) verschiebbar ist.

2. Anordnung nach Anspruch 1,
**dadurch gekennzeichnet, daß**
mehrere elektrooptische Bauelemente (10a, 10b, 10c, 10d) in Form eines kantenstrahlenden Laserdiodenbarrens (6) und entsprechend mehrere zugeordnete Linsen (31a, 31b, 31c, 31d) und Lichtwellenleiterenden (24a, 24b, 24c, 24d) vorgesehen sind und daß die Vertiefung (3) des ersten Trägers mit einer zweiten Spiegelfläche (3a) versehen ist, die den jeweiligen Strahlengang (S) zwischen den Bauelementen (10a, 10b, 10c, 10d) und den Linsen (31a, 31b, 31c, 31d) umlenkt.

3. Anordnung nach Anspruch 1 oder 2,
**dadurch gekennzeichnet, daß**
der dritte Träger (30) aus Silizium besteht und daß seine Unterseite (30b) poliert ist.

4. Anordnung nach einem der vorangehenden Ansprüche,
**dadurch gekennzeichnet, daß**
die Ausnehmung (16) des zweiten Trägers (12) durchgehend ist und daß deren oberseitige Öffnung (18) zur Ausrichtung einer Vertiefung (22d) für das Lichtwellenleiterende (24d) dient.

5. Anordnung nach einem der vorangehenden Ansprüche,
**dadurch gekennzeichnet, daß**
der dritte Träger (30) die Vertiefung (3) des ersten Trägers (2) vollständig abdeckt.

6. Anordnung nach einem der vorangehenden Ansprüche,
**dadurch gekennzeichnet, daß**
die Linsen auf dem dritten Träger ausgebildete Fresnellinsen sind.

7. Anordnung nach einem der Ansprüche 1 bis 5,
**dadurch gekennzeichnet, daß**
die Linsen (31a, 31b, 31c, 31d) integrale Bestandteile des dritten Trägers (30), vorzugsweise des Fortsatzes (36), sind.

## Claims

1. Optical coupling arrangement
- having a first carrier (2), which has an (2a) electro-optical component (10d),
- having a second carrier (12), which carries at least one optical fibre end (24d) and has a recess (16) which opens out towards the underside (12b) of said carrier and has a reflector surface (28) facing the optical fibre end (24d), and
- having a third carrier (30), which contains at least one lens (31d) and is arranged between the first carrier (2) and the second carrier (12),
- with the beam path (S) between the optical fibre end (24d) and the component (10d) extending via the reflector surface (28) and the lens (31d),
characterised
- in that the third carrier (30) has an extension (36) which fits in a form-locking manner into the underside opening of the recess (16) of the second carrier (12) and the side face of which forms at least one reference surface (36a) which cooperates with a corresponding reference surface (16a) of the second carrier (12) for the lateral positioning of the third carrier (30) and the lens (31d) with respect to the second carrier (12), and
- in that the upper side (30a) of the third carrier (30) is securely connected to the underside (12b) of the second carrier (12),
- while for the lateral adjustment of the lens (31d) with respect to the component (10d), the underside (30b) of the third carrier can be shifted on the upper side (2a) of the first carrier (2).

2. Arrangement according to claim 1,
characterised in that there is provided a plurality of electro-optical components (10a, 10b, 10c, 10d) in the form of an edge-radiating laser diode bar (6) and a corresponding plurality of associated lenses (31a, 31b, 31c, 31d) and optical fibre ends (24a, 24b, 24c, 24d), and in that the indentation (3) of the first carrier is provided with a second reflector surface (3a), which deflects the respective beam path (S) between the components (10a, 10b, 10c, 10d) and the lenses (31a, 31b, 31c, 31d).

3. Arrangement according to claim 1 or 2,
characterised in that the third carrier (30) consists of silicon, and in that the underside (30b) thereof is polished.

4. Arrangement according to one of the preceding claims, characterised in that the recess (16) of the second carrier (12) is continuous, and in that the upper side opening (18) thereof is used for the alignment of an indentation (22d) for the optical fibre end (24d).

5. Arrangement according to one of the preceding claims, characterised in that the third carrier (30) completely covers the indentation (3) of the first carrier (2).

6. Arrangement according to one of the preceding claims, characterised in that the lenses are Fresnel lenses constructed on the third carrier.

7. Arrangement according to one of the claims 1 to 5, characterised in that the lenses (31a, 31b, 31c, 31d) are integral components of the third carriers (30), preferably of the extension (36).

## Revendications

1. Dispositif de couplage optique, comprenant
- un premier substrat (2), muni d'un (2a) composant électro-optique (10d),
- un deuxième substrat (12), qui porte au moins une extrémité (24d) de guide d'onde lumineuse et qui présente un évidement (16) ouvert vers son côté inférieur (12b) et muni d'une face réfléchissante (28) tournée vers l'extrémité (24d) de guide d'onde lumineuse, et
- un troisième substrat (30), qui contient au moins une lentille (31d) et est disposé entre le premier substrat (2) et le deuxième substrat (12),
- le trajet des rayons (S) entre l'extrémité (24d) de guide d'onde lumineuse et le composant (10d) passant par la face réfléchissante (28) et la lentille (31d),
**caractérisé**
- en ce que le troisième substrat (30) présente un prolongement (36), qui s'adapte par complémentarité de forme dans l'ouverture inférieure de l'évidement (16) du deuxième substrat (12) et dont la face latérale forme au moins une face de référence (36a), qui coopère avec une face de référence correspondante (16a) du deuxième substrat (12) pour le positionnement latéral du troisième substrat (30) et de la lentille (31d) par rapport au deuxième substrat (12),
- et en ce que le côté supérieur (30a) du troisième substrat (30) est lié fixement au côté inférieur (12b) du deuxième substrat (12),
- tandis que pour l'ajustement latéral de la lentille (31d) par rapport au composant (10d), le côté inférieur (30b) du troisième substrat (30) peut coulisser sur le côté supérieur (2a) du premier substrat (2).

2. Dispositif selon la revendication 1, **caractérisé** en ce que sont prévus plusieurs composants électro-optiques (10a, 10b, 10c, 10d) sous la forme d'une platine (6) de diodes laser à rayonnement d'arête, et plusieurs lentilles (31a, 31b, 31c, 31d) et extrémités de guides d'onde lumineuse (24a, 24b, 24c, 24d) associées correspondantes, et en ce que le renfoncement (3) du premier substrat est pourvu d'une deuxième face réfléchissante (3a), qui dévie le trajet des rayons (S) respectif entre les composants (10a, 10b, 10c, 10d) et les lentilles (31a, 31b, 31c, 31d).

3. Dispositif selon la revendication 1 ou 2, **caractérisé** en ce que le troisième substrat (30) est constitué de silicium, et en ce que son côté inférieur (30b) est poli.

4. Dispositif selon l'une des revendications précédentes, **caractérisé** en ce que l'évidement (16) du deuxième substrat (12) est traversant, et en ce que son ouverture supérieure (18) sert à l'alignement d'un renfoncement (22d) pour l'extrémité (24d) de guide d'onde lumineuse.

5. Dispositif selon l'une des revendications précédentes, **caractérisé** en ce que le troisième substrat (30) recouvre entièrement le renfoncement (3) du premier substrat (2).

6. Dispositif selon l'une des revendications précédentes, **caractérisé** en ce que les lentilles sont des lentilles de Fresnel configurées sur le troisième substrat.

7. Dispositif selon l'une des revendications 1 à 5, **caractérisé** en ce que les lentilles (31a, 31b, 31c, 31d) sont d'une pièce avec le troisième substrat (30), de préférence avec le prolongement (36).
